# EUROPÄISCHE PATENTSCHRIFT

(11) **EP 3 548 661 B1**
(45) Veröffentlichungstag und Bekanntmachung des Hinweises auf die Patenterteilung: **09.09.2020**
(21) Anmeldenummer: 17797150.4
(22) Anmeldetag: 10.11.2017
(51) Int. Cl.: D21B 1/32, D21D 5/06

(54) **ROTIERENDE TROMMEL ZUR BEHANDLUNG VON FASERSTOFF**
ROTATING DRUM FOR TREATING FIBROUS MATERIAL
TAMBOUR ROTATIF POUR LE TRAITEMENT DE MATIÈRE FIBREUSE

(30) Priorität: 05.12.2016 DE 102016123419
(43) Veröffentlichungstag der Anmeldung: 09.10.2019
(73) Patentinhaber: Voith Patent GmbH, 89522 Heidenheim (DE)
(72) Erfinder: MÜLLER, Wolfgang, 88250 Weingarten (DE)
(74) Vertreter: Voith Patent GmbH - Patentabteilung
(86) Internationale Anmeldenummer: PCT/EP2017/078842
(87) Internationale Veröffentlichungsnummer: WO 2018/103999

(56) Entgegenhaltungen:
- EP-A2- 0 207 340
- DE-A1- 3 403 383
- DE-B3-102013 217 562
- GB-A- 2 050 187
- US-B1- 6 470 898

## Beschreibung

Die Erfindung betrifft eine rotierende Trommel zur Behandlung von Faserstoff, deren Rotationsachse höchstens 30° zur Horizontalen geneigt ist, in die an einer ersten Stirnseite mit Wasser vermischter Faserstoff zugeführt wird, welcher innerhalb der Trommel mittels Transportelementen von der ersten zur zweiten Stirnseite transportiert wird, wobei die Trommel perforiert ist, eine Feinfraktion die Perforation durchströmt und eine Grobfraktion von dieser abgewiesen wird.

Mit Hilfe einer solchen, beispielsweise in der DE 10 2012 219 708 A1 sowie der GB 2 050 187 beschriebenen Vorrichtung soll in vielen Fällen verschmutztes Altpapier mit Wasser vermischt, zerkleinert und sortiert werden. Hierzu wird in einer Auflösezone des meist liegenden Zylinders/Trommel das mit Wasser versetzte Altpapier durch Anheben, Rutschen und Fallen, bzw. Relativbewegungen der Stoffanteile zueinander, zerkleinert.
In der Sortierzone soll dann der gelöste Faserstoff von Unrat getrennt werden. Während die Feinfraktion die Perforation, d.h. die Sortieröffnungen passiert, wird die Grobfraktion mit dem Unrat abgewiesen und aus der Trommel geführt.
Die Auflösung kann auch in separaten Trommeln oder anderen Vorrichtungen erfolgen und wie zum Beispiel in der US 615 667 mittels eines Wasser-Spritzrohres unterstützt werden, welches mehrere axial nebeneinander angeordnete Düsenbereiche aufweist, deren Düsenstrahlen einen Umfangsbereich der Trommel mit Wasser benetzen.

Verfahren zur Behandlung von Altpapier, die mit solchen oder ähnlichen Trommeln arbeiten, haben den Vorteil einer besonders schonenden Auflösung, sowohl was empfindliche Fasersorten als auch sortierbar zu erhaltende, unerwünschte Begleitstoffe betrifft.
Allerdings weist die Grobfraktion dabei oft noch einen wesentlichen Faseranteil auf.

Die Aufgabe der Erfindung ist es daher die Behandlung des Faserstoffs zu intensivieren und dabei die Faserverluste zu minimieren.

Erfindungsgemäß wurde die Aufgabe im Wesentlichen dadurch gelöst, dass die erste Stirnseite der Trommel verschlossen ist und zumindest eine Rückhalte-Düse einen Wasserstrahl entgegen der Transportrichtung des Faserstoffs auf den Faserstoff richtet.
Von Vorteil ist dabei, dass innerhalb der Trommel wenigstens ein Wasser-Spritzrohr angeordnet ist, welches mehrere axial nebeneinander angeordnete Düsen-Bereiche mit einer oder mehreren Düsen aufweist, deren Düsenstrahlen in Rotationsrichtung einen möglichst zusammenhängenden Bereich mit einer Ausdehnung zwischen 30 und 180°, vorzugsweise zwischen 60 und 120° des Innenumfangs der im Allgemeinen zylindrischen Trommel mit Wasser benetzen.
Durch das großflächige Aufbringen des Wasch-Wassers über die Düsen-Bereiche wird bei dem, durch die Trommelrotation aufgelockerten Faserstoff eine großflächige Benetzung mit dem Wasch-Wasser gewährleistet. Dies wiederum führt zu einer Intensivierung der Auswaschung der Fasern und deren Abführung über die Perforation.
Daher sollten die Düsen-Bereiche in Umfangsrichtung mehr als 70, vorzugsweise mehr als 90% des Faserstoffs am Innenumfang der Trommel mit Wasser benetzen. Hierbei ist zu beachten, dass der Faserstoff in der Trommel infolge deren Rotation am Innenumfang mitläuft und meist im oberen Bereich der Trommel wieder nach unten abfällt.
Im Interesse einer umfassenden Benetzung des Faserstoffs sollte daher - quer zur Rotationsachse betrachtet - die Winkelhalbierende des vom Düsen-Bereich ausgehenden Sprühbereichs bezüglich der Senkrechten in Rotationsrichtung geneigt sein, wobei die Winkelhalbierende mit der Senkrechten vorzugsweise einen Winkel zwischen 1 und 90°, insbesondere zwischen 40 und 80° bildet.

Die Düsen-Bereiche können jeweils von mehreren, insbesondere in Umfangsrichtung nebeneinander angeordneten Düsen gebildet werden. Relativ einfach lässt sich eine großflächige Benetzung in Umfangsrichtung jedoch von vorzugsweise einer oder mehreren weitestgehend quer zur Rotationsachse ausgerichteten Schlitzdüsen realisieren.

Über die Rückhalte-Düse erfolgt auch hier eine umfassende Benetzung und Auswaschung des aufgelockerten Faserstoffs mit Wasch-Wasser. Möglich wird dies wegen der geschlossenen ersten Stirnseite der Trommel.
Die Rückhalte-Düse kann so einem zu schnellen Transport des Faserstoffs von der ersten zur anderen Stirnseite der Trommel entgegenwirken. Über den Wasserdruck der Rückhalte-Düse lässt sich die resultierende Transportgeschwindigkeit des Faserstoffs zur anderen Stirnseite insbesondere bei gleichbleibender Rotationsgeschwindigkeit der Trommel steuern.
Die optimale Behandlungszeit des Faserstoffs innerhalb der Trommel hängt wesentlich von der Beschaffenheit des Faserstoffs, vor allem seines Faseranteils ab.

Besonders einfach gestaltet sich der Behandlungsprozess des Faserstoffs, wenn die Zugabe des Faserstoffs in die Trommel diskontinuierlich erfolgt.
Dementsprechend wird dann die Rückhalte-Düse nur während der Behandlung der jeweiligen Teilmenge des Faserstoffs zugeschaltet, d.h. am Ende der Behandlung des in der Trommel befindlichen Faserstoffs deaktiviert und bei Zugabe neuen Faserstoffs wieder aktiviert.
Dies spart Energie und Wasser und ermöglicht gleichzeitig nach der Behandlung einen ungehinderten Transport der Grobfraktion aus der Trommel.
Dabei können Wasserdruck und/oder Wassermenge der Rückhalte-Düse ebenso wie die Behandlungszeit gesteuert werden.

Für den Transport des Faserstoffs von der ersten zur anderen Stirnseite der rotierenden Trommel sind die Transportelemente mit Vorteil als an der Innenwand der Trommel befestigte Schnecken-Wendel ausgebildet.

Zur Unterstützung der Bewegung, insbesondere des Anhebens der Faserstoffsuspension kann die Trommel an ihrer Innenwand auch eine oder mehrere Hebeleisten ohne und/oder mit axialer Förderwirkung aufweisen.

Außerdem sollte unterhalb der Trommel ein Auffangbehälter zur Aufnahme der Feinfraktion sowie des ablaufenden Wassers angeordnet sein.
Die Rotationsachse der Trommel kann waagerecht oder geneigt zur Waagerechten verlaufen. Im Falle einer Neigung in Richtung der anderen Stirnseite nach unten wird die Förderung des Faserstoffs zu dieser Stirnseite hin unterstützt und bei einer Neigung nach oben behindert.

Nachfolgend soll die Erfindung an einem Ausführungsbeispiel näher erläutert werden. In der beigefügten Zeichnung zeigt:
Figur 1: einen schematischen Längsschnitt durch eine Sortiervorrichtung mit einer rotierenden Trommel 1 und
Figur 2: einen entsprechenden Querschnitt dazu.

Die zylindrische Trommel 1 ist in einem Gehäuse 11 gelagert und wird über einen Antrieb 12 in Rotation versetzt, wobei die Rotationsachse 3 geringfügig geneigt zur Waagerechten verläuft.

Des Weiteren ist die Trommel 1 perforiert, wobei eine Feinfraktion die Perforation durchströmt und eine Grobfraktion bzw. das Rejekt mit den größeren Störstoffen von dieser abgewiesen wird.
Unterhalb der Trommel 1 befindet sich ein Auffangbehälter 13 zur Aufnahme der Feinfraktion. Oberhalb der Trommel 1 kann eine Sprüheinrichtung angeordnet werden, welche Wasser auf die Perforation richtet. Dies reinigt die Perforation und führt außerdem zu einer weiteren Verdünnung des Faserstoffs 2 innerhalb der Trommel 1.

Dabei ist eine erste Stirnseite 4 der Trommel 1 verschlossen und die axial gegenüberliegende, zweite Stirnseite 5 offen.
Über die offene, zweite Stirnseite 5 der Trommel 1 wird im oberen Bereich des Innenraums der Trommel 1 über eine axial verlaufende Zufuhrleitung 14 der zu behandelnde Faserstoff 2 zur ersten Stirnseite 4 der Trommel 1 geleitet und dort diskontinuierlich in den Innenraum der Trommel 1 abgegeben.

Von der ersten Stirnseite 4 der Trommel 1 wird der mit Wasser vermischter Faserstoff 2 dann innerhalb der Trommel 1 mittels Transportelementen 6 zur zweiten Stirnseite 5 transportiert.
Als Transportelement 6 fungiert hier eine an der Innenwand der Trommel 1 befestigte Schnecken-Wendel.

Die von der Perforation der Trommel 1 abgewiesenen, meist größeren Störstoffe werden in Form der Grobfraktion bzw. des Rejekts über die zweite Stirnseite 5 der Trommel 1 abgeführt.

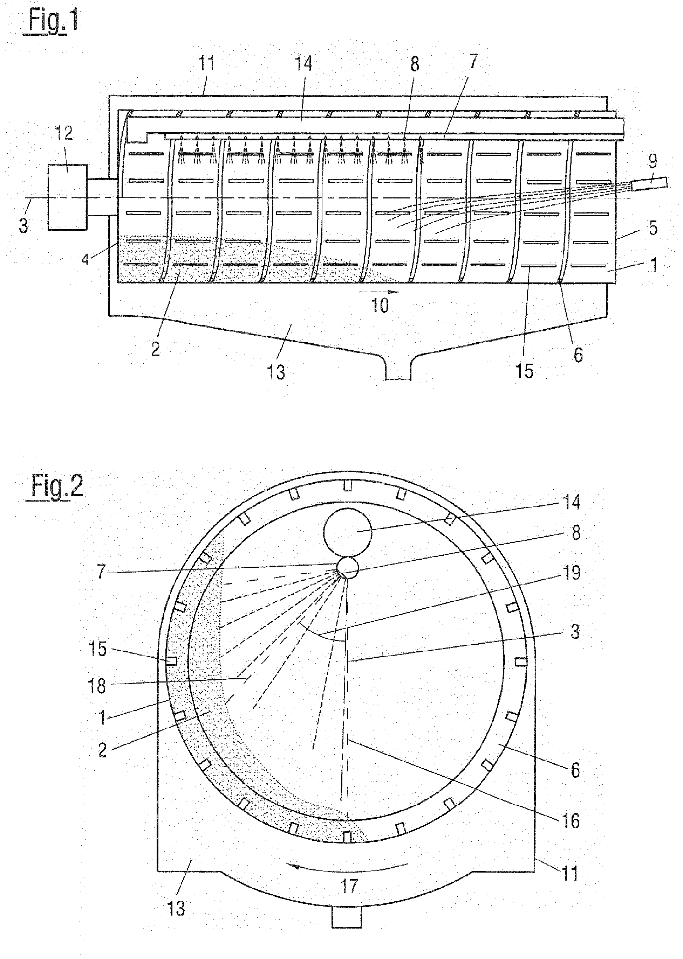

Dabei ist die Trommel 1 gemäß Figur 1 in Transportrichtung 10 von der ersten 4 zur zweiten 5 Stirnseite bezüglich der Waagerechten ca. 5° nach oben geneigt, so dass der Transport des Faserstoffs 2 behindert wird. Auf diese Weise verlängert sich der Behandlungszeitraum des Faserstoffs 2 in der Trommel 1.

Zur Auflösung des überwiegend aus Altpapier bestehenden Faserstoffs 2 besitzt die Trommel 1 auf der Innenseite Hebeleisten 15 o.ä. Einbauten. Solche Einbauten sind in vielfältiger Form bekannt und werden auf den jeweiligen Verwendungszweck abgestimmt.
In der Trommel 1 wird das Altpapier intensiv mit Wasser vermischt, wobei es infolge der Hebe-, Rutsch- und Fallbewegungen zu einer Zerkleinerung des aufgeweichten Papiermaterials kommt.

Um den Wasch- bzw. Sortierprozess zu unterstützen, wird der aufgelockerte Faserstoff 2 umfassend mit Wasser benetzt, so dass die Feinfraktion mit den Fasern problemlos die Perforation passieren kann.
Hierzu wird über die offene, zweite Stirnseite 5 der Trommel 1 ein Wasser-Spritzrohr 7 axial weitestgehend bis zur ersten Stirnseite 4 geführt. Das Wasser-Spritzrohr 7 befindet sich ebenfalls im oberen Bereich des Innenraums der Trommel 1 und kann daher an der Zufuhrleitung 14 befestigt werden.

Zur Realisierung eines großen Sprühbereiches weist das Wasser-Spritzrohr 7 eine Vielzahl von axial nebeneinander angeordneten Düsen-Bereichen 8 mit hier jeweils einer Schlitzdüse auf, deren längere Erstreckung weitestgehend quer zur Rotationsachse 3 ausgerichtet ist.
Die Düsen-Bereiche 8 benetzen dabei mehr als 90% des im jeweiligen axialen Abschnitt der Trommel 1 befindlichen Faserstoffs 2.
Um dies zu erreichen, spreizen sich die Düsenstrahlen jeder Schlitzdüse quer zur Rotationsachse 3 in einem Bereich zwischen 60 und 120°.
Des Weiteren ist quer zur Rotationsachse 3 die Winkelhalbierende 18 des vom Düsen-Bereich 8 ausgehenden Sprühbereichs bezüglich der Senkrechten 16 in Rotationsrichtung 17 geneigt, wobei die Winkelhalbierende 18 mit der Senkrechten 16 einen Winkel 19 zwischen 40 und 80° bildet. Damit wird dem Umstand Rechnung getragen, dass der Faserstoff 2 von den Hebeleisten 15 am Innenumfang in Rotationsrichtung 17 bis in den oberen Bereich der Trommel 1 mitgeschleppt wird.

Außerdem wird von wenigstens einer Rückhalte-Düse 9 jeweils ein Wasserstrahl entgegen der Transportrichtung 10 des Faserstoffs 2 auf den Faserstoff 2 gerichtet. Hierzu befindet sich die Rückhalte-Düse 9 im Bereich der offenen, zweiten Stirnseite 5 der Trommel 1.
Neben einer weiteren Verdünnung des Faserstoffs 1 kann über diesen Wasserstrahl der Transport des Faserstoffs 2 zur offenen Stirnseite 5 der Trommel 1 behindert werden. Je nach Wasserdruck und Wassermenge lässt sich so die Behandlungszeit der gerade in der Trommel 1 behandelten Teilmenge des Faserstoffs 2 steuern. Dementsprechend werden der Wasserdruck und/oder die Wassermenge bei der Rückhalte-Düse 9 zur Verkürzung der Behandlungszeit des Faserstoffs 2 vermindert und zur Verlängerung gesteigert.
Eine einfache energie- und wassersparende Steuerung ergibt sich aber, wenn die Rückhalte-Düse 9 am Ende der Behandlungszeit der in der Trommel 1 befindlichen Teilmenge des insgesamt zu behandelnden Faserstoffs 2 deaktiviert und bei Zugabe einer neuen Teilmenge des Faserstoffs 2 wieder aktiviert wird.

## Patentansprüche

1. Rotierende Trommel (1) zur Behandlung von Faserstoff (2), deren Rotationsachse (3) höchstens 30° zur Horizontalen geneigt ist, in die an einer ersten Stirnseite (4) mit Wasser vermischter Faserstoff (2) zugeführt wird, welcher innerhalb der Trommel (1) mittels Transportelementen (6) von der ersten (4) zur zweiten Stirnseite (5) transportiert wird, wobei die Trommel (1) perforiert ist, eine Feinfraktion die Perforation durchströmt und eine Grobfraktion von dieser abgewiesen wird, **dadurch gekennzeichnet, dass** die erste Stirnseite (4) der Trommel (1) verschlossen ist und zumindest eine Rückhalte-Düse (9) einen Wasserstrahl entgegen der Transportrichtung (10) des Faserstoffs (2) auf den Faserstoff (2) richtet.

2. Rotierende Trommel (1) nach Anspruch 1, **dadurch gekennzeichnet, dass** die Zugabe des Faserstoffs (2) in die Trommel (1) diskontinuierlich erfolgt und die Rückhalte-Düse (9) am Ende der Behandlung des in der Trommel (1) befindlichen Faserstoffs (2) deaktiviert und bei Zugabe neuen Faserstoffs (2) wieder aktiviert wird.

3. Rotierende Trommel (1) nach einem der vorhergehenden Ansprüche, **dadurch gekennzeichnet, dass** die Transportelemente (6) als an der Innenwand der Trommel (1) befestigte Wendeln ausgebildet sind.

4. Rotierende Trommel (1) nach einem der vorhergehenden Ansprüche, **dadurch gekennzeichnet, dass** innerhalb der Trommel (1) wenigstens ein Wasser-Spritzrohr (7) angeordnet ist, welches mehrere axial nebeneinander angeordnete Düsen-Bereiche (8) mit einer oder mehreren Düsen aufweist, deren Düsenstrahlen in Rotationsrichtung (17) einen Bereich zwischen 30 und 180° des Innenumfangs der Trommel (1) mit Wasser benetzen.

5. Rotierende Trommel (1) nach Anspruch 4, **dadurch gekennzeichnet, dass** die Düsen der Düsen-Bereiche (8) jeweils in Rotationsrichtung (17) einen Bereich zwischen 60 und 120° des Innenumfangs der Trommel (1) mit Wasser benetzen.

6. Rotierende Trommel (1) nach Anspruch 4 oder 5, **dadurch gekennzeichnet, dass** quer zur Rotationsachse (3) die Winkelhalbierende (18) des vom Düsen-Bereich (8) ausgehenden Sprühbereichs bezüglich der Senkrechten (16) in Rotationsrichtung (17) geneigt ist.

7. Rotierende Trommel (1) nach Anspruch 6, **dadurch gekennzeichnet, dass** die Winkelhalbierende (18) mit der Senkrechten (16) einen Winkel (19) zwischen 1 und 90°, insbesondere zwischen 40 und 80° bildet.

8. Rotierende Trommel (1) nach einem der Ansprüche 4 bis 7, **dadurch gekennzeichnet, dass** die Düsen-Bereiche (8) in Umfangsrichtung mehr als 70, vorzugsweise mehr als 90% des Faserstoffs (2) am Innenumfang der Trommel (1) mit Wasser benetzen.

9. Rotierende Trommel (1) nach einem der Ansprüche 4 bis 8, **dadurch gekennzeichnet, dass** die Düsen-Bereiche (8) jeweils von einer quer zur Rotationsachse (3) ausgerichteten Schlitzdüse gebildet werden.

## Claims

1. Rotating drum (1) for treating fibrous material (2), the axis of rotation (3) of the drum being inclined by at most 30° relative to the horizontal, a fibrous material (2) mixed with water being fed into the drum at a first end (4), the fibrous material being transported from the first (4) to the second end (5) within the drum (1) by means of transport elements (6), wherein the drum (1) is perforated, a fine fraction flows through the perforation and a coarse fraction is repelled by the latter, **characterized in that** the first end (4) of the drum (1) is closed and at least one retaining nozzle (9) directs a water jet onto the fibrous material (2) counter to the transport direction (10) of the fibrous material (2).

2. Rotating drum (1) according to Claim 1, **characterized in that** the fibrous material (2) is added into the drum (1) discontinuously, and the retaining nozzle (9) is deactivated at the end of the treatment of the fibrous material (2) located in the drum (1) and is activated again when new fibrous material (2) is added.

3. Rotating drum (1) according to one of the preceding claims, **characterized in that** the transport elements (6) are formed as helices fixed to the inner wall of the drum (1).

4. Rotating drum (1) according to one of the preceding claims, **characterized in that** inside the drum (1) there is arranged at least one water spray pipe (7), which has a plurality of nozzle regions (8) arranged axially beside one another and having one or more nozzles, the nozzle jets of which wet a region between 30 and 180° of the inner circumference of the drum (1) in the direction of rotation (17) with water.

5. Rotating drum (1) according to Claim 4, **characterized in that** the nozzles of the nozzle regions (8) each wet a region between 60 and 120° of the inner circumference of the drum (1) in the direction of rotation (17).

6. Rotating drum (1) according to Claim 4 or 5, **characterized in that** transversely with respect to the axis of rotation (3), the bisector (18) of the spray regions emanating from the nozzle region (8) is inclined with respect to the vertical (16) in the direction of rotation (17).

7. Rotating drum (1) according to Claim 6, **characterized in that** the bisector (18) forms an angle (19) between 1 and 90°, in particular between 40 and 80°, with the vertical (16).

8. Rotating drum (1) according to one of Claims 4 to 7, **characterized in that** in the circumferential direction, the nozzle regions (8) wet more than 70, preferably more than 90%, of the fibrous material (2) on the inner circumference of the drum (1) with water.

9. Rotating drum (1) according to one of Claims 4 to 8, **characterized in that** the nozzle regions (8) are each formed by a slot nozzle oriented transversely relative to the axis of rotation (3).

## Revendications

1. Tambour rotatif (1) pour le traitement de matière fibreuse (2) dont l'axe de rotation (3) est incliné au maximum de 30° par rapport à l'horizontale, dans lequel une matière fibreuse (2) mélangée avec de l'eau est acheminée au niveau d'un premier côté frontal (4), laquelle matière fibreuse est transportée à l'intérieur du tambour (1) au moyen d'éléments de transport (6) du premier (4) au deuxième côté frontal (5), le tambour (1) étant perforé, une fraction fine traversant la perforation et une fraction grossière de celle-ci étant rejetée, **caractérisé en ce que** le premier côté frontal (4) du tambour (1) est fermé et au moins une buse de retenue (9) oriente un jet d'eau à l'encontre du sens de transport (10) de la matière fibreuse (2) vers la matière fibreuse (2).

2. Tambour rotatif (1) selon la revendication 1, **caractérisé en ce que** l'ajout de la matière fibreuse (2) dans le tambour (1) s'effectue de manière discontinue et la buse de retenue (9), à la fin du traitement de la matière fibreuse (2) se trouvant dans le tambour (1), est désactivée et est à nouveau activée lors de l'ajout de nouvelle matière fibreuse (2).

3. Tambour rotatif (1) selon l'une quelconque des revendications précédentes, **caractérisé en ce que** les éléments de transport (6) sont réalisés sous forme de spires fixées au niveau de la paroi intérieure du tambour (1).

4. Tambour rotatif (1) selon l'une quelconque des revendications précédentes, **caractérisé en ce qu'**à l'intérieur du tambour (1) est disposé au moins un tube de pulvérisation d'eau (7) qui présente plusieurs régions de buse (8) disposées axialement les unes à côté des autres avec une ou plusieurs buses, dont les jets de buse mouillent avec de l'eau dans la direction de rotation (17) une région comprise entre 30 et 180° de la périphérie intérieure du tambour (1).

5. Tambour rotatif (1) selon la revendication 4, **caractérisé en ce que** les buses des régions de buse (8) mouillent à chaque fois avec de l'eau dans la direction de rotation (17) une région comprise entre 60 et 120° de la périphérie intérieure du tambour (1).

6. Tambour rotatif (1) selon la revendication 4 ou 5, **caractérisé en ce que** transversalement à l'axe de rotation (3), la bissectrice (18) de la région de pulvérisation partant de la région de buse (8) est inclinée par rapport à la verticale (16) dans la direction de rotation (17).

7. Tambour rotatif (1) selon la revendication 6, **caractérisé en ce que** la bissectrice (18) forme avec la verticale (16) un angle (19) compris entre 1 et 90°, en particulier entre 40 et 80°.

8. Tambour rotatif (1) selon l'une quelconque des revendications 4 à 7, **caractérisé en ce que** les régions de buse (8) mouillent avec de l'eau dans la direction périphérique plus de 70, de préférence plus de 90 % de la matière fibreuse (2) au niveau de la périphérie intérieure du tambour (1).

9. Tambour rotatif (1) selon l'une quelconque des revendications 4 à 8, **caractérisé en ce que** les régions de buse (8) sont à chaque fois formées par une buse à fente orientée transversalement à l'axe de rotation (3) .
